# EUROPEAN PATENT APPLICATION

(11) **EP 4 151 780 A1**
(43) Date of publication of application: **22.03.2023**
(21) Application number: 21197523.0
(22) Date of filing: 17.09.2021
(51) Int. Cl.: C25D 5/36, C25D 7/04, B23P 15/10

(54) **METHOD FOR DEPOSITING A CHROMIUM LAYER ON A SURFACE OF A ROUND-SHAPED SUBSTRATE INCLUDING LASER PRE-TREATING**

(71) Applicant: Atotech Deutschland GmbH & Co. KG, 10553 Berlin (DE)
(72) Inventor: Ross, Thorsten, 10553 Berlin (DE); Northington, Michael, 10553 Berlin (DE)
(74) Representative: Atotech Deutschland GmbH & Co. KG

(57) **Abstract**

The present invention relates to a method for depositing a chromium layer on a surface. The present invention relates in particular to a method for depositing a chromium layer on a surface of a round-shaped substrate, the method comprising a pre-treating step with a laser such that material is removed from the substrate.

## Description

### Field of the Invention

The present invention relates to a method for depositing a chromium layer on a surface. The present invention relates in particular to a method for depositing a chromium layer on a surface of a round-shaped substrate, the method comprising a pre-treating step with a laser such that material is removed from the substrate.

### Background of the Invention

Chromium plating has a far-reaching history for decorative and functional applications. Although starting with hexavalent chromium plating, development of trivalent chromium plating has been started during the last decades in order to replace environmentally problematic hexavalent chromium species.

In order to achieve acceptable plating results, surfaces of a respective substrate are typically smoothened by mechanical grinding.

Prior to chromium plating, typically a number of further pre-treatment steps are carried out such as degreasing and etching.

The degreasing step primarily removed grease, oil, and further hydrophobic residues remaining on a substrate due to the manufacturing/grinding process and subsequent conservation as well as transportation.

The etching step removes leftovers of grease and oil but primarily removes oxides and serves as activation of the substrate's surface for subsequent steps. It is well known that in the etching step iron-containing material is removed from iron substrates which accumulates over time in a respective etching composition. More dramatically, this accumulated iron is continually dragged-in into the chromium plating composition, in particular if a hexavalent chromium plating composition is utilized. This drag-in finally results in a contaminated plating composition, which needs either to be replaced or at least regenerated. All this means an undesired loss of active plating time.

In addition, the pre-treatment steps are time and energy consuming.

Furthermore, chromium plating desires to achieve a good as possible corrosion resistance. An improvement regarding corrosion resistance is known in the art. For example, CN 102703899 A relates to a surface treatment process for a cylinder including laser cladding and subsequent chromium deposition.

All the aforementioned steps and goals are under constant revision to find improvements thereof since there is a constant demand to particularly increase the corrosion resistance of plated substrates, which leads to an increased lifetime of such articles and reduces the need of repairs and replacements. As a result, resources and the environment are less burdened.

### Objective of the Invention

It is the objective of the present invention to provide a method for depositing a chromium layer on a surface of a round-shaped substrate, such that (A) an increased corrosion resistance is achieved, and (B) less production time as well as (C) less energy is needed.

Furthermore, it is desired to provide a respective method that additionally decreases contamination of a respective plating composition if a hexavalent chromium plating composition is utilized.

### Summary of the Invention

These objectives are solved by the method of the present invention, in particular by a method for depositing a chromium layer on a surface of a round-shaped substrate, the method comprising the steps
(a) providing the substrate with the surface, wherein the substrate is an iron-comprising substrate having a diameter of less than 75 mm,
(b) pre-treating the substrate such that a pre-treated surface results,
(c) providing a plating composition comprising
   (i) a chromium species,
(d) providing at least one anode,
(e) contacting the substrate comprising the pre-treated surface with the plating composition and applying an electrical current to said substrate and the at least one anode such that the chromium layer is electrolytically deposited onto the pre-treated surface,
wherein in step (b) the pre-treating comprises
(b-1) laser-treating the surface of the substrate with a laser such that material is removed from the substrate.

Own experiments have shown that a pre-treating as defined above leads to significant improvements not only during the method is carried out but in addition drastically improves the corrosion resistance of respectively treated substrates (see examples below). It has been shown that a pre-treatment as defined above significantly improves the surface quality prior to chromium deposition (further details in examples below). In the context of the present invention, the terms "pre-treating" and "pre-treatment" have identical meaning.

Furthermore, the method of the present invention significantly reduces the typical etching time prior to plating along with a reduced consumption of energy. This leads to an overall reduced energy consumption although preferably a high energy laser is utilized in step (b-1) for the laser-treating. This is confirmed in detail in the examples below.

In addition, if a hexavalent chromium plating composition is utilized in the method of the present invention, a significantly reduced contamination, in particular with iron-containing material/iron ions, is observed (see again examples below). This increases significantly the lifetime of a respective plating composition.

Altogether, the method of the present invention significantly spares valuable resources and is less environmentally burdensome.

In the context of the present invention, the term "chromium layer" also includes "chromium alloy layer".

### Detailed Description of the Invention

The method of the present invention is most preferably for depositing a hard chrome layer, also known as a functional chromium layer having high wear resistance. Thus, the method of the present invention is preferably not for decorative applications. However, it is not explicitly excluded that the method of the present invention can be applied to decorative applications.

In step (a) of the method of the present invention, the substrate with a surface is provided, wherein the substrate is an iron-comprising substrate. Thus, the substrate is metallic. Preferred is a method of the present invention, wherein the substrate is a steel substrate.

As defined above, the substrate is round-shaped, i.e., has a circular or at least circularlike shape. This preferably means a cylindrical shape, most preferably a cylindrical shape defined by a diameter and a length, wherein the diameter is preferably constant over the entire length. Substrates with such a shape can be comparatively easy treated in a respective laser unit. Preferably, by rotating the substrate, the laser can cover the substrate's surface in a quick and reliable manner, which would be more sophisticated and in particular time-consuming with a substrate not having such a shape. Preferred is a method of the present invention, wherein the substrate is a round stock, preferably a piston rod, most preferably a piston rod for a shock absorber. In the context of the present invention, the term "round stock" is understood to be identical with the term "round bar", "round stock bar", "rod", and cylinder. This also includes that a method of the present invention is preferred, wherein the round-shaped substrate is preferably selected from the group consisting of a round bar, a round stock bar, a rod, and a cylinder. Thus, preferred is a method of the present invention, wherein the round-shaped substrate has a consistent radius towards the axical center of said substrate. Furthermore, preferred is a method of the present invention, wherein during step (b-1) the substrate is rotated.

In some cases, a method of the present invention is preferred, wherein the round-shaped substrate is a hardened substrate, preferably an inductively hardened substrate.

In some cases, a method of the present invention is preferred, wherein the round-shaped substrate is a steel substrate but not an austenitic stainless-steel substrate, preferably a steel substrate but not a stainless-steel substrate.

Preferred is a method of the present invention, wherein the substrate (preferably as defined above as being preferred) has a total length of 2.5 m or less, preferably of 2 m or less, more preferably of 1.5 m or less, even more preferably of 1 m or less, most preferably of 0.8 m or less. The total length is not zero but rather more than zero, preferably 0.1 m or more, more preferably 0.2 m or more, most preferably 0.3 m or more.

Preferred is a method of the present invention, wherein the substrate (preferably as defined above as being preferred) has a diameter of 70 mm or less, preferably of 60 mm or less, more preferably of 50 mm or less, even more preferably of 45 mm or less, yet even more preferably of 40 mm or less, most preferably of 35 mm or less, yet most preferably of 30 mm or less. The diameter is not zero but rather more than zero, preferably 5 mm or more, more preferably 8 mm or more, most preferably 13 mm or more.

In step (b) of the method of the present invention the substrate is pre-treated such that a pre-treated surface results, wherein the pre-treating comprises at least step (b-1) laser-treating the surface of the substrate with a laser such that material is removed from the substrate. The laser preferably provides a laser beam. Step (b-1) is essential and the most important pre-treating step in the context of the present invention. As a result, a laser-treated surface results (i.e. a pre-treated surface). However, additional pre-treating steps prior to step (b-1) or after (b-1) (but prior to step (e)) are not excluded. In the context of the present invention, the "pre-treated surface" most preferably includes all pre-treating steps applied prior to step (e).

Step (b-1) is a removal step, i.e. a subtractive step. This also means that a method of the present invention is preferred, wherein step (b-1) is not an additive step, i.e., no material, in particular no additional layer, is deposited by means of the laser-treating (i.e. no laser deposition). Very preferably, the laser-treating in step (b-1) does not comprise a laser cladding. Compared to laser cladding, the laser-treating according to the present invention is less sophisticated and time-consuming because no additional and new material, respectively, needs to be deposited and incorporated, respectively. In contrast a removal of material is desired such that removed material results.

It is assumed (without wishing being bound by theory) that in step (b-1) the material comprises oxides of the material the substrate is composed of as well as substrate material itself. Furthermore, it is assumed that conductive and/or non-conductive particles/impurities released from the surface (e.g. adsorbed on the surface or contained in inclusions/capsules; also sometimes named "nodule spots") are contained in the removed material. Thus, "nodule spots" denote irregularities on the surface such as encapsulated and/or adsorbed non-conductive or conductive particles/impurities. It is assumed that they are a result of the manufacturing and/or mechanical grinding process. It is furthermore believed that such irregularities are starting spots for defects in a subsequently deposited chromium layer if they are exposed to the surface. Own experiments have shown that in a common etching step such irregularities are either not removed, or if removed, at least leave behind a not levelled surface irregularity.

Preferred is a method of the present invention, wherein the laser-treating in (b-1) is a laser-polishing. In the context of the present invention, "polishing" includes not only removal of said nodule spots but most preferably a removal of typical brushes and brush patterns. They are typical for mechanically grinded and polished substrates and usually result in an increased real surface area in relation to the theoretical geometric surface area (also called RSAI). By means of the method of the present invention, such brushes and brush patterns are significantly removed such that a very homogeneous surface is obtained. As a result, the real surface area is getting much closer to the theoretical geometric surface area (see examples below).

In the context of the present invention, removal, and preferably polishing, as defined for step (b-1), includes a melting and preferably a fusing of at least a part of the removed material. However, no new or additional material is preferably deposited or incorporated.

The laser utilized in step (b-1) is preferably a high energy laser. Preferred is a method of the present invention, wherein all or at least a part of the material is removed from the substrate by sublimation. Provided the energy is sufficiently high, material is instantly transformed into a gaseous state. This is beneficial because the substrate is heated only to a very minimum. Furthermore, no burrs are formed, which contributes to the very desired smoothness and homogeneous surface.

Preferred is a method of the present invention, wherein the laser-treating in (b-1) comprises a pulsed laser-treating with a laser providing a pulsed laser beam. Pulsed laser beams provide sufficient energy in a sufficiently short time to avoid unnecessary heating of the substrate and for sublimating the material to be removed.

Preferred is a method of the present invention, wherein the laser beam has a beam energy ranging from 1 mJ to 200 mJ, preferably from 5 mJ to 150 mJ, more preferably from 10 mJ to 100 mJ, even more preferably from 15 mJ to 50 mJ, most preferably from 21 mJ to 36 mJ.

More preferred is a method of the present invention, wherein the pulsed laser beam has a pulse energy ranging from 1 mJ to 100 mJ, preferably from 5 mJ to 80 mJ, more preferably from 10 mJ to 60 mJ, even more preferably from 15 mJ to 45 mJ, most preferably from 21 mJ to 36 mJ.

Preferred is a method of the present invention, wherein the pulsed laser beam has a repetition rate ranging from 10 kHz to 150 kHz, preferably from 15 kHz to 100 kHz, more preferably from 20 kHz to 75 kHz, most preferably from 25 kHz to 50 kHz.

Preferred is a method of the present invention, wherein the laser in (b-1) is operated with a wavelength ranging from 900 nm to 1200 nm, preferably from 925 nm to 1150 nm, more preferably from 950 nm to 1100 nm, even more preferably from 975 nm to 1075 nm, most preferably from 1000 nm to 1050 nm.

In the context of the present invention, it is very desirable that step (b-1) is carried out as quick as possible. Compared to conventional chromium plating (in particular with a hexavalent chromium plating composition), a pre-treating of the substrate without laser-treating often requires a significant duration. However, if a laser-treating is carried out in a very short way, an impressive overall timesaving can be achieved. Preferred is a method of the present invention, wherein step (b-1) is carried out from 0.5 second to 60 seconds, preferably from 0.8 seconds to 50 seconds, more preferably from 1 second to 40 seconds, even more preferably from 1.3 seconds to 30 seconds, yet even more preferably from 1.6 seconds to 20 seconds, most preferably from 1.9 seconds to 10 seconds, even most preferably from 2.1 seconds to 5 seconds. A very preferred range is from 1 second to 5 seconds. In order to keep this duration as short as possible, even more than one laser, respectively laser beam, is preferably utilized, including pulsed laser beams. Most preferred are two lasers, respectively two laser beams, preferably including two pulsed laser beams.

Preferably, as much as possible of the surface is covered within a minimum of time in order to achieve an excellent efficiency. Preferred is a method of the present invention, wherein the laser in (b-1) has an area treatment rate ranging from 50 cm²/s to 250 cm²/s, preferably from 60 cm²/s to 200 cm²/s, more preferably from 70 cm²/s to 150 cm²/s, most preferably from 80 cm²/s to 130 cm²/s.

As already mentioned above, preferably a high energy laser is utilized. In some cases, a method of the present invention is preferred, wherein the laser in (b-1) has a maximum energy output of up to 10.000 W, preferably of up to 8000 W. Preferred is a method of the present invention, wherein the laser in (b-1) has an average energy output ranging from 500 W to 4000 W, preferably from 750 W to 3500 W, more preferably from 900 W to 3000 W, most preferably from 1000 W to 2500 W.

In order to provide a sufficient energy density, the laser beam preferably has a small diameter. Preferred is a method of the present invention, wherein the laser in (b-1) operates with a laser beam (including a pulsed laser beam) having a beam diameter of 2 mm or less, preferably of 1.5 mm or less, even more preferably of 1 mm or less. This is particularly preferred in combination with the above-mentioned pulse energy, repetition rate, and/or wavelength.

As mentioned above, the laser-treating utilized in the method of the present invention comprises a removal of material. Preferred is a method of the present invention, wherein after step (b-1) the surface of the substrate treated with the laser has a smaller total surface area than prior to step (b-1), based on the laser-treated surface. Typically, the substrate, preferably as defined above, has a theoretical geometric surface area. However, due to irregularities on the surface, e.g. brushes, brush patterns, and nodule spots, respectively, the real surface area is typically increased (also called total surface area). The relationship between theoretical geometric surface area and real surface area is defined in a so called RSAI value, expressed in percentage. In the context of the present invention, this value refers to the surface treated in step (b-1). In an ideal case the value is 0 %, meaning that the real surface area is identical to the theoretical geometric surface area, based on the laser-treated surface. As a matter of fact, in reality the surface is not ideally smooth. Therefore, the real surface area is typically higher than the theoretical geometric surface area. However, the closer RSAI is to zero it can be reasonably assumed that the surface quality is highly improving in terms of smoothness and less geometric irregularities are expected.

More preferred is a method of the present invention, wherein the surface treated in step (b-1) has a RSAI of 3 % or below, preferably of 2.8 % or below, more preferably of 2.5 % or below, even more preferably of 2 % or below, yet even more preferably of 1.5 % or below, most preferably of 1 % or below, yet even most preferably of 0.8 % or below.

Also preferred is a method of the present invention, wherein the surface treated in step (b-1) has a RSAI reduced by 20 % or more than prior to step (b-1), preferably by 35 % or more, more preferably by 50 % or more, even more preferably by 70 % or more, most preferably by 80 % or more.

A primary goal of the present invention is to smoothen or level the substrate's surface to the best extent possible. In this regard, the surface is considered as flat or levelled. In other words, it is a primary goal to reduce RSAI as much as possible, ideally to get as close to zero as possible. Thus, the laser-treating in step (b-1) of the method of the present invention is not a structuring or patterning laser-treating; this means, is not a reliefforming or engraving laser-treating. Thus, no kind of artwork, letters, numbers, and other types of signs and forms are created in step (b-1). This is by no means desired.

Furthermore, the laser-treating in step (b-1) of the method of the present invention is not a laser-hardening.

In fact, it is most preferred to not alter the inherent characteristics of the substrate as such. Typically, in the context of the present invention, the iron-comprising substrate has a crystal structure; in particular if the substrate is a steel substrate. Preferred is a method of the present invention, wherein the crystal structure is not or at last not substantially altered during step (b-1).

### Further pre-treatment steps:

As mentioned above, additional pre-treating steps are not excluded.

After step (b-1) is carried out, a substrate comprising a laser-treated surface is obtained.

Preferred is a method of the present invention, wherein the substrate comprising the laser-treated surface is additionally treated in step
(b-2) etching the substrate comprising the laser-treated surface in an etching composition.

As a result, in particular the laser-treated surface is etched. This step is most preferably applied if the plating composition in steps (c) and (e) is a hexavalent chromium plating composition.

Step (b-2) is preferably an electrolytic step. This means that a current is applied. In other words, it includes an electrochemical etching.

Preferred is a method of the present invention, wherein during step (b-2) a current is applied with a current density ranging from 5 A/dm² to 70 A/dm², preferably from 10 A/dm² to 60 A/dm², more preferably from 15 A/dm² to 50 A/dm², most preferably from 18 A/dm² to 38 A/dm², yet even most preferably from 20 A/dm² to 30 A/dm².

Preferred is a method of the present invention, wherein step (b-2) is carried out from 2 seconds to 45 seconds, preferably from 3 seconds to 40 seconds, more preferably from 4 seconds to 35 seconds, even more preferably from 6 seconds to 30 seconds, yet even more preferably from 8 seconds to 25 seconds, most preferably from 11 seconds to 20 seconds. This is significantly less compared to a conventional hexavalent chromium deposition processes, which typically includes about 90 seconds.

Preferred is a method of the present invention, wherein the etching composition comprises chromic acid and/or chromium trioxide.

Preferred is a method of the present invention, wherein the chromic acid and chromium trioxide has a total concentration ranging from 180 g/L to 400 g/L, based on the total volume of the etching composition, preferably from 190 g/L to 350 g/L, more preferably from 200 g/L to 300 g/L, most preferably from 210 g/L to 250 g/L.

However, if the plating composition in steps (c) and (e) is a trivalent chromium plating composition, a method of the present invention is preferred, wherein the substrate comprising the laser-treated surface is additionally treated in an alternative step
(b-2) pickling the substrate comprising the laser-treated surface in a pickling composition.

This preferably means that in such a case the pickling composition is applied instead of the etching composition.

Preferably, the pickling composition is acidic.

Preferably, the pickling composition comprises one or more than one mineral acid, preferably comprises hydrochloric acid, sulfuric acid, hydrofluoric acid, and/or phosphoric acid; most preferably hydrochloric acid and/or sulfuric acid. Preferably, besides water, the pickling composition further comprises only said one or more than one mineral acid.

The main goal of an etching as well as pickling is a removal of superficial oxides and an activation of the surface for subsequent steps.

### Chromium deposition:

In step (c) of the present invention, a plating composition is provided comprising (i) a chromium species. The method of the present invention is suited for depositing a chromium layer from a hexavalent chromium plating composition as well as a trivalent chromium plating composition.

In step (d) at least one anode is provided. In the context of the present invention, the order of steps (c) and (d) is not necessarily fixed but can be vice versa.

In step (e) the actual depositing of the chromium layer is carried out.

To the specific deposition methods in more detail:

### Hexavalent chromium deposition:

Preferred is a method of the present invention, wherein in step (c) the plating composition is a hexavalent chromium plating composition and the chromium species (i) comprises a hexavalent chromium species, preferably chromic acid and/or chromium trioxide.

The term, "hexavalent chromium" refers to the element chromium with the oxidation number +6. A species thereof denotes each compound (incl. ions) comprising this element in this oxidation state. Most preferably chromic acid and chromium trioxide, respectively, are the only hexavalent chromium species.

Preferred is a method of the present invention, wherein the hexavalent chromium species has a concentration ranging from 75 g/L to 480 g/L, based on the total volume of the hexavalent chromium plating composition, preferably from 105 g/L to 460 g/L, more preferably from 150 g/L to 440 g/L, even more preferably from 200 g/L to 420 g/L, most preferably from 225 g/L to 400 g/L. The concentration of the hexavalent chromium species in the context of the present invention is preferably referenced to CrO₃.

In some cases, a method of the present invention is particularly preferred, wherein the hexavalent chromium species has a concentration ranging from 210 g/L to 290 g/L, preferably from 220 g/L to 280 g/L, more preferably from 230 g/L to 270 g/L, most preferably from 235 g/L to 265 g/L.

However, in some other cases a method of the present invention is preferred, wherein the hexavalent chromium species has a concentration ranging from 281 g/L to 420 g/L, preferably from 291 g/L to 400 g/L, more preferably from 300 g/L to 390 g/L, even more preferably from 320 g/L to 380 g/L, most preferably from 340 g/L to 370 g/L.

Preferably, the hexavalent chromium species is dissolved in water by forming an aqueous composition, preferably a solution. Thus, the hexavalent chromium plating composition utilized in the method of the present invention is preferably an aqueous hexavalent chromium plating composition, most preferably comprising more than 50 vol.-% water, based on the total volume of the hexavalent chromium plating composition.

Preferred is a method of the present invention, wherein the hexavalent chromium plating composition is acidic, preferably has a strongly acidic pH. This means, the pH is preferably 1 or below, most preferably zero or below.

The hexavalent chromium plating composition is preferably substantially free of, preferably does not comprise, trivalent chromium ions.

Preferred is a method of the present invention, wherein the hexavalent chromium plating composition is substantially free of, preferably does not comprise, chloride ions. This is preferably very advantageous if platinized titanium anodes are utilized in the method of the present invention.

Preferred is a method of the present invention, wherein the hexavalent chromium plating composition further comprises
(ii) sulfate ions.

Preferably the source of said sulfate ions is sulfuric acid. Sulfuric acid is excellently dissolving chromium trioxide.

Preferred is a method of the present invention, wherein in the hexavalent chromium plating composition the sulfate ions have a concentration ranging from 0.1 g/L to 10 g/L, based on the total volume of the hexavalent chromium plating composition, preferably from 1 g/L to 8.5 g/L, more preferably from 1.5 g/L to 7.5 g/L, even more preferably from 2 g/L to 6.5 g/L, most preferably from 3 g/L to 5 g/L.

In some cases, a method of the present invention is preferred, wherein in the hexavalent chromium plating composition the sulfate ions have a concentration ranging from 0.1 g/L to 8 g/L, based on the total volume of the hexavalent chromium plating composition, preferably from 0.3 g/L to 7 g/L, more preferably from 0.5 g/L to 6 g/L, even more preferably from 0.7 g/L to 5 g/L, most preferably from 1 g/L to 4 g/L.

Preferred is a method of the present invention, wherein the hexavalent chromium plating composition further comprises
(iii) one or more than one sulfonic acid and/or salts thereof with two, three or more than three sulfonic acid groups, preferably one or more than one alkylsulfonic acid and/or salts thereof with two, three or more than three sulfonic acid groups.

Preferred is a method of the present invention, wherein said one or more than one sulfonic acid and/or salts thereof comprises one or more than one alkane di-sulfonic acid and/or salts thereof, preferably methane di-sulfonic acid and/or salts thereof. These are very preferred sulfonic acids and/or salts thereof with two sulfonic acid groups.

Preferred is a method of the present invention, wherein said one or more than one alkane di-sulfonic acid and salts thereof have a total concentration ranging from 0.5 g/L to 15 g/L, based on the total volume of the hexavalent chromium plating composition, preferably from 1 g/L to 12 g/L, more preferably from 1.5 g/L to 10 g/L.

Preferred is a method of the present invention, wherein said one or more than one sulfonic acid and/or salts thereof comprises one or more than one alkane tri-sulfonic acid and/or salts thereof, preferably methane tri-sulfonic acid and/or salts thereof. These are very preferred sulfonic acids and/or salts thereof with three sulfonic acid groups.

Preferred is a method of the present invention, wherein said one or more than one alkane tri-sulfonic acid and salts thereof have a total concentration ranging from 0.1 g/L to 13 g/L, based on the total volume of the hexavalent chromium plating composition, preferably from 0.5 g/L to 10 g/L, more preferably from 1 g/L to 7 g/L.

Preferred is a method of the present invention, wherein the hexavalent chromium plating composition further comprises
(iv) optionally silver ions, preferably comprising silver ions.

Silver ions preferably reduce the risk of forming detrimental amounts of trivalent chromium ions.

Preferred is a method of the present invention, wherein said silver ions have a total concentration ranging from 0.0001 g/L to 3 g/L, based on the total volume of the hexavalent chromium plating composition, preferably from 0.001 g/L to 1 g/L, more preferably from 0.005 g/L to 0.5 g/L most preferably from 0.01 g/L to 0.2 g/L. Very preferred is a total concentration ranging from 0.0001 g/L to 0.2 g/L.

In some cases, preferred is a method of the present invention, wherein the hexavalent chromium plating composition is substantially free of, preferably does not comprise, methane sulfonic acid and salts thereof, preferably is substantially free of, preferably does not comprise, alkyl-mono-sulfonic acids and salts thereof, more preferably is substantially free of, preferably does not comprise, mono-sulfonic acids and salts thereof.

In step (d) at least one anode is provided, preferably selected from the group consisting of lead-comprising anodes, precious metal-comprising anodes, and mixed metal oxide anodes, most preferably selected from the group consisting of lead-comprising anodes.

Preferred is a method of the present invention, wherein the lead-comprising anodes comprise more than 50 wt.-% lead, based on the total weight of the lead-comprising anodes, preferably 60 wt.-% or more, more preferably 70 wt.-% or more, even more preferably 80 wt.-% or more, most preferably 90 wt.-% or more.

Preferred is a method of the present invention, wherein the lead-comprising anodes are selected from the group consisting of lead-tin anodes and lead-antimony anodes.

Preferred is a method of the present invention, wherein the precious metal-comprising anodes comprise platinized titanium anodes and/or platinized niobium anodes. In the method of the present invention, precious metal-comprising anodes, preferably as defined above, are most preferred.

In step (e) of the method of the present invention the hexavalent chromium plating composition is contacted with the substrate comprising the pre-treated surface, preferably including a pre-treating as defined above according to step (b-2).

Preferred is a method of the present invention, wherein in step (e) the chromium layer has a thickness in a range from 0.05 µm to 1000 µm, preferably from 1 µm to 800 µm, more preferably from 2.1 µm to 600 µm, even more preferably from 3 µm to 400 µm, yet even more preferably from 4 µm to 300 µm, and most preferably from 5 µm to 250 µm. This preferably likewise applies to a chromium layer deposited from a trivalent chromium plating composition comprising trivalent chromium ions as chromium species, preferably as described below in the text.

Preferred is a method of the present invention, wherein in step (e) the electrical current has a cathodic current density of at least 18 A/dm², preferably of at least 25 A/dm², more preferably of at least 30 A/dm², even more preferably of at least 40 A/dm², most preferably of at least 50 A/dm². Preferably, the cathodic current density is in a range from 18 A/dm² to 260 A/dm², more preferably from 25 A/dm² to 200 A/dm², most preferably from 35 A/dm² to 100 A/dm².

In some cases, a method of the present invention is preferred, wherein in step (e) the electrical current has a cathodic current density ranging from 100 A/dm² to 450 A/dm², preferably from 115 A/dm² to 330 A/dm², more preferably from 130 A/dm² to 210 A/dm², most preferably from 145 A/dm² to 170 A/dm².

However, in some special cases a method of the present invention is preferred, wherein in step (e) the electrical current has a cathodic current density up to 1400 A/dm², preferably up to 1200 A/dm², more preferably up to 1100 A/dm², most preferably up to 1000 A/dm². This is particularly the case if the substrate is significantly small, e.g. a valve shaft. Thus, in general, in step (e) the electrical current preferably ranges from 18 A/dm² to 1400 A/dm², preferably from 25 A/dm² to 1200 A/dm², more preferably from 30 A/dm² to 1100 A/dm², most preferably from 35 A/dm² to 1000 A/dm².

Preferably, in step (e) the electrical current is a direct current.

Preferred is a method of the present invention, wherein in step (e) the hexavalent chromium plating composition has a temperature in a range from 20°C to 95°C, preferably from 30°C to 90°C, more preferably from 40°C to 85°C, even more preferably from 50°C to 80°C, most preferably from 65°C to 77°C.

Preferred is a method of the present invention, wherein step (e) is performed for a time period from 5 minutes to 180 minutes, preferably from 10 minutes to 100 minutes, more preferably from 11 minutes to 60 minutes.

After step (e) a chromium-deposited substrate is obtained.

In some cases, preferred is a method of the present invention further comprising after step (e) step
(f) heat-treating the chromium-deposited substrate obtained from step (e).

Preferred is a method of the present invention, wherein in step (f) the heat-treating is carried out at a temperature ranging from 100°C to 270°C, preferably from 120°C to 250°C, more preferably from 150°C to 225°C, most preferably from 170°C to 200°C.

Preferred is a method of the present invention, wherein in step (f) the heat-treating is carried out for a time period from 1 hour to 10 hours, preferably from 2 hours to 4 hours. By preferably performing a heat-treatment according to step (f), more preferably at the preferred temperatures and/or for the preferred time periods, the properties of the chromium layer can be further improved (e.g. reduction of hydrogen embrittlement). This beneficial effect preferably likewise applies to a chromium layer obtained by a trivalent chromium plating composition comprising trivalent chromium ions as chromium species, preferably as described below in the text.

### Trivalent chromium deposition:

Alternatively, preferred is a method of the present invention, wherein in step (c) the plating composition is a trivalent chromium plating composition and the chromium species (i) comprises trivalent chromium ions. The term "trivalent chromium ions" refers to Cr³⁺-ions in a free and/or complexed form.

Preferred is a method of the present invention, wherein the trivalent chromium plating composition furthermore comprises water (i.e. is aqueous), preferably comprises 50 wt.-% or more water, based on the total weight of the trivalent chromium plating composition, preferably 60 wt.-% or more, more preferably 70 wt.-% or more, even more preferably 80 wt.-% or more, yet even more preferably 90 wt.-% or more, most preferably 95 wt.-% or more.

Preferred is a method of the present invention, wherein the trivalent chromium plating composition has an acidic pH, preferably has a pH ranging from 4.1 to 7.0, preferably from 4.5 to 6.5, more preferably from 5.0 to 6.0, most preferably from 5.3 to 5.9.

Preferred is a method of the present invention, wherein in the trivalent chromium plating composition the trivalent chromium ions have a total concentration ranging from 5 g/L to 40 g/L, based on the total volume of the trivalent chromium plating composition, preferably from 10 g/L to 30 g/L, more preferably from 14 g/L to 27 g/L, most preferably from 17 g/L to 24 g/L.

Preferred is a method of the present invention, wherein said trivalent chromium ions are obtained from a soluble, trivalent chromium ion containing source, typically a water-soluble salt comprising said trivalent chromium ions. A generally preferred, well available, and cost-efficient water-soluble salt is alkaline trivalent chromium sulfate.

Preferred is a method of the present invention, wherein the trivalent chromium plating composition furthermore comprises at least one complexing agent for the trivalent chromium ions, preferably selected from the group consisting of organic complexing agents and salts thereof, preferably carboxylic acids and salts thereof, more preferably aliphatic carboxylic acids and salts thereof, most preferably aliphatic mono-carboxylic acids and salts thereof. Preferred aliphatic mono-carboxylic acids and salts thereof are C₁-C₁₀ aliphatic mono-carboxylic acids and salts thereof, preferably C₁-C₈ aliphatic mono-carboxylic acids and salts thereof, more preferably C₁-C₆ aliphatic mono-carboxylic acids and salts thereof, most preferably C₁-C₃ aliphatic mono-carboxylic acids and salts thereof. Most preferably, the at least one complexing agent comprises at least formate and/or acetate. As a result, the trivalent chromium ions can be efficiently stabilized in the trivalent chromium plating composition by the complexing agents, preferably at the pH as defined above. Typically, such complexing agents are preferably incorporated as carbon into the chromium layer.

Preferred is a method of the present invention, wherein in the trivalent chromium plating composition the at least one complexing agent for the trivalent chromium ions has a total concentration ranging from 50 g/L to 350 g/L, based on the total volume of the plating composition, preferably from 70 g/L to 320 g/L, more preferably from 90 g/L to 300 g/L, even more preferably from 100 g/L to 250 g/L, most preferably 120 g/L to 210 g/L.

To the trivalent chromium plating composition, preferably no hexavalent chromium species is intentionally added. This includes for example chromic acid and chromium trioxide. Thus, the trivalent chromium plating composition is substantially free of, preferably does not comprise, hexavalent chromium species (except very small amounts which may be unavoidably formed anodically).

In some cases, a method of the present invention is preferred, wherein the trivalent chromium plating composition furthermore comprises a transition metal not being chromium, more preferably iron ions, nickel ions, copper ions, and/or zinc ions.

However, in other cases, a method of the present invention is preferred, wherein the trivalent chromium plating composition is substantially free of, preferably does not comprise, iron ions.

In some cases, a method of the present invention is preferred, wherein the trivalent chromium plating composition is substantially free of, preferably does not comprise, nickel ions.

In some cases, a method of the present invention is preferred, wherein the trivalent chromium plating composition is substantially free of, preferably does not comprise, copper ions.

In some cases, a method of the present invention is preferred, wherein the trivalent chromium plating composition is substantially free of, preferably does not comprise, zinc ions.

More preferred is a method of the present invention, wherein in the trivalent chromium plating composition the trivalent chromium ions form 90 wt.-% or more of all transition metal ions, based on the total weight of all transition metal ions, preferably 93 wt.-% or more, more preferably 95 wt.-% or more, most preferably 97 wt.-% or more. In most cases a trivalent chromium plating composition is preferred, wherein chromium species are the only transition metal species, most preferably said trivalent chromium ions are the only transition metal species.

The presence of said metal ions not being chromium (so called metal alloying elements) typically leads to a respective chromium alloy layer. However, more typical and preferred are non-metal alloying elements in a respective chromium alloy layer, preferably selected from the group consisting of carbon, nitrogen, and oxygen.

Preferred is a method of the present invention, wherein the trivalent chromium plating composition furthermore comprises one or more than one compound selected from the group consisting of
- one or more than one type of halogen ions, preferably chloride ions and/or bromide ions;
- one or more than one type of alkali metal cations, preferably sodium and/or potassium;
- sulfate ions; and
- ammonium ions.

By adding one or more of the above-mentioned compounds the deposition of a respective chromium layer can be significantly improved.

Preferably, the trivalent chromium plating composition comprises one or more than one type of halogen ions, preferably bromide ions and/or chloride ions. Preferably, bromide ions have a concentration of at least 0.06 mol/L, based on the total volume of the trivalent chromium plating composition, more preferably of at least 0.1 mol/L, even more preferably of at least 0.15 mol/L. Bromide anions particularly suppress effectively the anodic formation of undesired hexavalent chromium species.

In some cases, a trivalent chromium plating composition is preferred comprising chloride ions, preferably in addition to bromide ions. However, in other cases it is preferred that the trivalent chromium plating composition is essentially free of, preferably does not comprise, chloride ions. However, this preferably does not exclude the presence of other halogen ions, preferably bromide ions. Preferably (if chloride ions are present), chloride ions have a total concentration ranging from 0.01 mol/L to 1.8 mol/L, based on the total volume of the trivalent chromium plating composition, preferably ranging from 0.2 mol/L to 1.6 mol/L, more preferably ranging from 0.6 mol/L to 1.4 mol/L, most preferably ranging from 0.8 mol/L to 1.2 mol/L.

Preferably, the trivalent chromium plating composition comprises one or more than one type of alkali metal cations, preferably sodium and/or potassium, in a total concentration preferably ranging from 0 mol/L to 0.5 mol/L, based on the total volume of the trivalent chromium plating composition, more preferably from 0 mol/L to 0.3 mol/L, even more preferably from 0 mol/L to 0.1 mol/L, and most preferably from 0 mol/L to 0.08 mol/L.

Typically, rubidium, francium, and caesium ions are not utilized in a respective trivalent chromium plating composition, although they are not necessarily excluded. However, preferably the one or more than one type of alkali metal cations includes metal cations of lithium, sodium, and potassium, most preferably sodium and potassium. However, in some cases, a trivalent chromium plating composition is preferred not comprising said one or more than one type of alkali metal cations. In such a case, preferably ammonium ions are alternatively preferred.

Preferably, the trivalent chromium plating composition comprises ammonium ions, preferably in a total concentration ranging from 1 mol/L to 10 mol/L, based on the total volume of the trivalent chromium plating composition, more preferably from 2 mol/L to 8 mol/L, even more preferably from 3 mol/L to 7 mol/L, and most preferably from 4 mol/L to 6 mol/L.

Preferably, the trivalent chromium plating composition comprises sulfate ions, preferably in a total amount ranging from 50 g/L to 250 g/L, based on the total volume of the trivalent chromium plating composition.

Preferred is a trivalent chromium plating composition being essentially free of, preferably not comprising, boric acid, preferably is essentially free of, preferably does not comprise, boron-containing compounds.

Boron-containing compounds are not desired because they are environmentally problematic. When using boron-containing compounds, wastewater treatment is expensive and time consuming. Furthermore, boric acid typically shows poor solubility and therefore has the tendency to form precipitates. Although such precipitates can be solubilized upon heating, a respective trivalent chromium plating composition cannot be utilized for chromium plating during this time. There is a significant risk that such precipitates facilitate a reduced chromium layer quality. Thus, the trivalent chromium plating composition is preferably essentially free, preferably does not comprise, any boron-containing compounds. Surprisingly, the trivalent chromium plating composition performs very well without boron-containing compounds, in particular in the above-mentioned (preferred) pH ranges.

In the context of the present invention, the terms "does not comprise", "not comprising", and alike, respectively, typically denote that respective compounds and/or ingredients are not intentionally added to e.g. the trivalent chromium plating composition. This does not exclude that such compounds are dragged in as impurities along with other relevant chemicals. However, the total amount of such compounds and ingredients is typically below the detection range and/or is not critical in the various aspects of the present invention. This preferably applies likewise to the deposition of a chromium layer from a hexavalent chromium plating composition.

Typically preferred is a method of the present invention, wherein the trivalent chromium plating composition is essentially free of, preferably does not comprise, organic compounds containing divalent sulfur, preferably is essentially free of, preferably does not comprise, sulfur-containing compounds with a sulfur atom having an oxidation number below +6.

In step (d) at least one anode is provided, preferably selected from the group consisting of graphite anodes, stainless steel anodes, and mixed metal oxide on titanium anodes. Preferably, the at least one anode does not comprise any lead or chromium.

Prior to step (e), in some cases a method of the present invention is preferred, wherein after step (b-1) the pre-treated substrate is furthermore contacted with one or more than one nickel plating composition such that at least one nickel layer is deposited. As a result, a nickel-deposited substrate is obtained. This most preferably applies if a trivalent chromium plating composition is utilized in steps (c) and (e).

In step (e) the trivalent chromium plating composition is contacted with the substrate comprising the pre-treated surface, preferably also comprising a nickel layer, and an electrical current is applied.

Preferred is a method of the present invention, wherein in step (e) the electrical current is a direct current (DC). Preferably, the direct current is a direct current without interruptions during step (e), wherein more preferably the direct current is not pulsed (non-pulsed DC). Furthermore, the direct current preferably does not include reverse pulses.

Preferably, the electrical current has a current density identical as defined above for the hexavalent chromium plating composition. However, in some cases, a method of the present invention is preferred, wherein the current density for a trivalent chromium plating composition has a cathodic current density of at least 18 A/dm², preferably of at least 20 A/dm², more preferably of at least 25 A/dm², even more preferably of at least 30 A/dm², most preferably of at least 39 A/dm². Preferably, the cathodic current density is in a range from 18 A/dm² to 200 A/dm², more preferably from 20 A/dm² to 180 A/dm², more preferably from 23 A/dm² to 150 A/dm², even more preferably from 25 A/dm² to 120 A/dm², yet even more preferably from 27 A/dm² to 90 A/dm², most preferably from 30 A/dm² to 60 A/dm².

In some rare cases, a method of the present invention is preferred, wherein the electrical current has a cathodic current density ranging from 100 A/dm² to 200 A/dm², preferably from 110 A/dm² to 190 A/dm², more preferably from 120 A/dm² to 180 A/dm², most preferably 130 A/dm² to 170 A/dm², even most preferably from 140 A/dm² to 160 A/dm². This most preferably applies if step (e) is performed for a comparatively short time period.

As a result, a respective chromium layer or chromium alloy layer is electrolytically deposited, preferably a chromium alloy layer. Preferred alloying elements comprise carbon, nitrogen, and/or oxygen. More preferably, the chromium alloy layer comprises at least carbon and oxygen (i.e. besides chromium). Carbon is typically present because of organic compounds usually present in the trivalent chromium plating composition. These alloying elements are typically called non-metal alloying elements.

More preferably, the only alloying elements are selected from the group consisting of carbon, nitrogen, and oxygen, more preferably selected from the group consisting of carbon and oxygen, most preferably the only alloying elements are carbon and oxygen. Preferably, the chromium alloy layer contains 80 wt.-% chromium or more, based on the total weight of the chromium alloy layer, more preferably 85 wt.-% or more, even more preferably 90 wt.-% or more, most preferably 95 wt.-% or more.

Aforementioned regarding metallic alloying elements already discussed above in connection with the trivalent chromium plating composition (e.g. zinc, iron, etc.), preferably applies likewise to the chromium layer obtained from the trivalent chromium plating composition.

Preferred is a method of the present invention, wherein in step (e) the plating composition comprising trivalent chromium ions has a temperature in a range from 20°C to 90°C, preferably from 30°C to 70°C, more preferably from 40°C to 60°C, most preferably from 45°C to 58°C.

Preferred is a method of the present invention, wherein step (e) is performed for a time period from 5 min to 500 min, preferably from 10 min to 300 min, more preferably from 15 min to 200 min, even more preferably from 20 min to 140, most preferably from 30 min to 80 min.

In some rare cases, a method of the present invention is preferred, wherein step (e) is performed for a time period from 2 min to 10 min, preferably from 3 min to 9 min, more preferably from 4 min to 8 min, even more preferably from 5 min to 7 min. This is most preferred if the electrical current has a comparatively high cathodic current density, preferably of at least 100 A/dm², more preferably of at least 120 A/dm², even more preferably of at least 140 A/dm².

Likewise, to what is said above regarding a hexavalent chromium plating composition, preferred is a method of the present invention (i.e. for utilizing a trivalent chromium plating composition) further comprising after step (e) step
(f) heat-treating the chromium-deposited substrate obtained from step (e).

Preferred is a method of the present invention, wherein in step (f) the heat-treating is carried out at a temperature ranging from 80°C to 600°C, preferably from 100°C to 400°C, more preferably from 120°C to 350°C, even more preferably from 135°C to 300°C, most preferably from 150°C to 250°C.

Preferred is a method of the present invention, wherein in step (f) the heat-treating is carried out for a time period from 1 hour to 10 hours, preferably from 2 hours to 4 hours.

Preferred is a method of the present invention, wherein in step (e), the chromium layer, has a thickness in a range from 1.1 µm to 500 µm, preferably from 2 µm to 450 µm, more preferably from 4 µm to 400 µm, even more preferably from 6 µm to 350 µm, yet even more preferably from 8 µm to 300 µm, and most preferably from 10 µm to 250 µm. These are typically layer thicknesses to provide sufficient wear resistance.

As already mentioned above, the term "chromium layer" generally includes also a "chromium alloy layer".

In some cases, a method of the present invention is preferred, wherein in step (e) the chromium layer has a thickness of 15 µm or more, preferably of 20 µm or more, more preferably of 30 µm or more.

In both cases, for a trivalent chromium plating composition as well as a hexavalent chromium plating composition, preferably a chromium layer with a bright color is electrolytically deposited, preferably having a L* value of 70 or more, defined by CIELAB color system, more preferably of 75 or more, even more preferably of 80 or more.

The spirit of the present invention is further illustrated in the following examples without limiting the scope of the invention as herein defined in the claims.

### Examples

(a) providing the substrate
For testing, a plurality of 395 mm steel piston rods (22 mm diameter, i.e. round-shaped) was provided as iron-comprising substrates, which were pre-smoothened by grinding to a typical average roughness Rₐ of approximately 0.1 µm or below. Prior to the next step, the piston rods were degreased.
(b) pre-treating according to the present invention
A number of said steel piston rods was pre-treated (i.e. laser-polished) with a laser unit (TruMicro, TRUMPF GmbH & Co KG) in order to remove material from the substrate to obtain a uniform and smooth surface. For that, a pulsed laser beam was used in four experimental setups (Experiment numbers 1 to 4). During the pre-treating, the laser had an average energy output of 1000 W, a laser beam diameter of less than 1 mm, a wavelength of 1020 nm, and a total laser-treating time for each piston rod of approximately 3 seconds. Further parameters are summarized in Table 1 below. For comparative reasons, a few piston rods were separated and not pre-treated by laser-polishing (in the following named "C" for Comparative experiment).

**Table 1: pre-treatment parameters**

| | **Experiment number** | | | |
|---|---|---|---|---|
| **Parameters** | **1** | **2** | **3** | **4** |
| Pulse energy [mJ] | 25 | 16 | 10 | 31 |
| Repetition rate [kHz] | 41 | 63 | 100 | 32 |
| Area treatment rate [cm²/s] | 87 | 87 | 126 | 87 |

Subsequently, all piston rods were subjected to an etching composition in an electrolytic etching step. The aqueous etching composition comprised 200 g/L to 250 g/L chromic acid and optionally sulfuric acid.

The laser-treated piston rods were contacted with the etching composition and electrolytically treated for 15 seconds applying a current density of 30 A/dm².

Piston rods of the Comparative experiment C were contacted with the etching composition and electrolytically treated for 95 seconds applying a current density of 45 A/dm². Such an etching represents the common prior art pre-treatment prior to hexavalent chromium deposition.

Each piston rod was subjected to an interference microscope prior to the etching step to evaluate the quality of the surface. The results are summarized in Table 2 below.

**Table 2: pre-treatment results**

| | **Experiment number** | | | | |
|---|---|---|---|---|---|
| **Parameters** | **1** | **2** | **3** | **4** | **C** |
| RSAI [%] | 0.5 | 0.8 | 2.8 | 0.6 | 3.7 |
| Nodule spots | none | none | none | few | several |
| Brush pattern | 0 | 0 | 1 | 0 | 3 |

In Table 2 "Brush pattern" is evaluated as follows:
"0" denotes not brush patterns (i.e. no brushes relief-structures) are seen
"1" denotes only residual brush patterns
"2" denotes significant residual brush patterns
"3" denotes a brush pattern as typically obtained after grinding

As shown in Table 2, each laser-treated piston rod showed a lower RSAI compared to Comparative experiment C. The difference is impressive, in particular for Experiment numbers 1, 2, and 4; the difference for 3 still being significant. "RSAI" describes the real surface area in relation to the theoretical geometric surface area, based on the laser-treated surface (further information in the text above).

Table 2 shows that the number of nodule spots is significantly reduced after laser-treatment. Furthermore, it was also observed that the size of such nodule spots is reduced if they are not fully removed.

Table 2 also shows that the typical brush pattern observed after mechanical grinding was fully removed in Experiment number 1, 2, and 4, and significantly reduced in number 3.
(c) providing a plating composition
   For subsequently depositing a chromium layer, a respective plating composition was provided. The plating composition was a hexavalent chromium plating composition comprising 250 g/L to 300 g/L chromic acid as chromium species.
(d) providing at least one anode
   For subsequent chromium deposition, platinized titanium anodes were provided and utilized.
(e) chromium electrodeposition
   After the etching step, all piston rods were subjected to said hexavalent chromium plating composition for subsequent chromium deposition at a current density of 165 A/dm², at 70°C, for about 5 minutes deposition time to obtain a chromium layer having about 15 µm layer thickness, followed by a heat treatment at 240°C for 2 hours. Afterwards, the piston rods were again evaluated by interference microscopy. In Experiment numbers 1 to 4 no nodule spots were observed. However, in Comparative experiment C the nodule spots were even observable after chromium deposition having approximately identical dimensions than prior to chromium deposition.

Furthermore, the piston rods were subjected to a NSS test carried out according to ISO 9227. The results are summarized in Table 3 below.

**Table 3: deposition results, NSS test**

| | **Experiment number** | | | | |
|---|---|---|---|---|---|
| **Parameters** | **1** | **2** | **3** | **4** | **C** |
| NSS test 264 h | 1 | 1 | 1 | 0 | 1 |
| NSS test 684 h | 1 | 1 | 1 | 0 | 1 |
| NSS test 840 h | 1 | 1 | 2 | 0 | 4 |
| NSS test 1000 h | 1 | 3 | 3 | 1 | 5 |

In Table 3, NSS test is evaluated as follows:
"0" no defects; 0% of surface corrosion and thus no red rust was observed
"1" insignificant corrosion; spots with up to 0.1 % area of defect
"2" neglectable corrosion; spots with up to 0.25 % area of defect
"3" significant corrosion; spots with up to 0.5 % area of defect
"4" inacceptable corrosion; spots with up to 1 % area of defect
"5" critical corrosion; spots with up to 2.5 % area of defect

As seen in Table 3, the pre-treatment according to the present invention significantly increases corrosion resistance with very acceptable results up to 1000 hours NSS test, which is a remarkable improvement over conventional hexavalent chromium plating. It is assumed that this is achieved by smoothening the surface in such a way that substantial amounts of surface defects are removed, in particular nodule spots.

Furthermore, the present experiments have shown that the etching duration can be drastically reduced from commonly 95 seconds to 15 seconds along with reduced current densities. This is in itself already a drastic improvement. Furthermore, this results in at least two additional benefits:
(a) the shorter the etching the less material is removed from the substrates and enriched in the etching composition, in particular iron containing material/iron ions, and
(b) the total energy consumption of a laser-treating in combination with a shorter etching step at reduced current density consumed less energy compared to a common etching step without laser-treating as carried out in Comparative experiment C.

Regarding benefit (a), own experiments showed that the reduced iron containing material/iron ions present in the etching composition also reduced the drag-in of such material/ions into the hexavalent chromium plating composition. Own analysis showed (under continuous plating conditions) that the amount of iron drag-in into the hexavalent chromium plating composition for Comparative experiment C is about 4000 g per day, wherein the drag-in in a method according to the present invention in Experiment numbers 1 to 4 was reduced to about 400 g per day. Thus, it can be concluded that the amount of iron dragged-in into the hexavalent chromium plating composition can be reduced significantly; at least by a factor of 10. As a result thereof, regeneration, e.g. by means of ion exchange treatment, of the hexavalent chromium plating composition needs to be done significantly less frequently.

Regarding benefit (b), own calculations showed that energy savings for Experiment numbers 1 to 4 of 5 % to 10 % were achieved compared to Comparative experiment C. Although the laser-treating is carried out with a high energy laser, it is assumed that the energy efficiency in the method of the present invention is significantly increased.

## Claims

1. A method for depositing a chromium layer on a surface of a round-shaped substrate, the method comprising the steps
(a) providing the substrate with the surface, wherein the substrate is an iron-comprising substrate having a diameter of less than 75 mm,
(b) pre-treating the substrate such that a pre-treated surface results,
(c) providing a plating composition comprising
(i) a chromium species,
(d) providing at least one anode,
(e) contacting the substrate comprising the pre-treated surface with the plating composition and applying an electrical current to said substrate and the at least one anode such that the chromium layer is electrolytically deposited onto the pre-treated surface,
wherein in step (b) the pre-treating comprises
(b-1) laser-treating the surface of the substrate with a laser such that material is removed from the substrate.

2. The method of claim 1, wherein the substrate is a steel substrate.

3. The method of claim 1 or 2, wherein the substrate is a round stock, preferably a piston rod, most preferably a piston rod for a shock absorber.

4. The method of any of claims 1 to 3, wherein the laser-treating in (b-1) is a laser-polishing.

5. The method of any of claims 1 to 4, wherein all or at least a part of the material is removed from the substrate by sublimation.

6. The method of any of claims 1 to 5, wherein the laser-treating in (b-1) comprises a pulsed laser-treating with a laser providing a pulsed laser beam.

7. The method of claim 6, wherein the pulsed laser beam has a pulse energy ranging from 1 mJ to 100 mJ, preferably from 5 mJ to 80 mJ, more preferably from 10 mJ to 60 mJ, even more preferably from 15 mJ to 45 mJ, most preferably from 21 mJ to 36 mJ.

8. The method of any of claims 6 or 7, wherein the pulsed laser beam has a repetition rate ranging from 10 kHz to 150 kHz, preferably from 15 kHz to 100 kHz, more preferably from 20 kHz to 75 kHz, most preferably from 25 kHz to 50 kHz.

9. The method of any of claims 1 to 8, wherein the laser in (b-1) is operated with a wavelength ranging from 900 nm to 1200 nm, preferably from 925 nm to 1150 nm, more preferably from 950 nm to 1100 nm, even more preferably from 975 nm to 1075 nm, most preferably from 1000 nm to 1050 nm.

10. The method of any of claims 1 to 9, wherein the laser in (b-1) has an area treatment rate ranging from 50 cm²/s to 250 cm²/s, preferably from 60 cm²/s to 200 cm²/s, more preferably from 70 cm²/s to 150 cm²/s, most preferably from 80 cm²/s to 130 cm²/s.

11. The method of any of claims 1 to 10, wherein the laser in (b-1) has an average energy output ranging from 500 W to 4000 W, preferably from 750 W to 3500 W, more preferably from 900 W to 3000 W, most preferably from 1000 W to 2500 W.

12. The method of any of claims 1 to 11, wherein the laser in (b-1) operates with a laser beam having a beam diameter of 2 mm or less, preferably of 1.5 mm or less, even more preferably of 1 mm or less.

13. The method of any of claims 1 to 12, wherein after step (b-1) the surface of the substrate treated with the laser has a smaller total surface area than prior to step (b-1), based on the laser-treated surface.

14. The method of any of claims 1 to 13, wherein in step (c) the plating composition is a hexavalent chromium plating composition and the chromium species (i) comprises a hexavalent chromium species, preferably chromic acid and/or chromium trioxide.

15. The method of any of claims 1 to 13, wherein in step (c) the plating composition is a trivalent chromium plating composition and the chromium species (i) comprises trivalent chromium ions.
